# EUROPEAN PATENT SPECIFICATION

(11) **EP 3 913 011 B1**
(45) Date of publication and mention of the grant of the patent: **21.10.2026**
(21) Application number: 21170282.4
(22) Date of filing: 23.04.2021
(51) Int. Cl.: C08G 59/66, C08F 8/08, C08G 75/04

(54) **ALIPHATIC EPOXY-TERMINATED POLYSULFIDE POLYMER**
ALIPHATISCHES EPOXYTERMINIERTES POLYSULFIDPOLYMER
POLYMÈRE POLYSULFURE À TERMINAISON ÉPOXY ALIPHATIQUE

(30) Priority: 19.05.2020 EP 20175540
(43) Date of publication of application: 24.11.2021
(73) Proprietor: Nouryon Chemicals International B.V., 6824 BM Arnhem (NL)
(72) Inventor: PROBST, Christian, 07973 Greiz Thueringen (DE); KLOBES, Olaf, 07973 Greiz Thueringen (DE); BURKHARDT, Volker, 07973 Greiz Thueringen (DE)
(74) Representative: Ingrassia, Fisher & Lorenz UK Ltd.

(56) References cited:
- EP-A1- 0 171 198
- US-A1- 2005 119 449
- US-A1- 2005 131 207
- US-A1- 2006 287 466

## Description

This invention relates to an aliphatic epoxy-terminated polysulfide polymer and a process for preparing the same.

### Background

Epoxy-terminated polysulfide polymers are excellent binders for epoxy systems, including adhesives, coatings and sealants, combining the flexibility, chemical resistance and crack bridging of a polysulfide with the chemical reactivity of epoxy resin technology.

Epoxy-terminated polysulfide polymers and methods for their production have long been known.

WO 03/099908 A1, for example, discloses a method for the production of polymer polysulfides comprising epoxy end groups by reacting polysulfides comprising thiol end groups with epichlorohydrin in the presence of aqueous alkali lye. The epichlorohydrin is initially introduced and the polysulfide is added in a metered fashion. The reaction mixture is then worked-up.

A problem with the method of WO 03/099908 A1 however, is that it takes over 16 hours to complete. In addition, the method requires the use of an organic solvent, involved filtering and distillation steps, and the handling of highly volatile and highly flammable epichlorohydrin. Furthermore, residues of epichlorohydrin are inevitably included in the product.

An alternative method for preparing epoxy-terminated polysulfides is described in WO 2004/099283 A1. Here, epoxy resins based on bisphenol A and/or bisphenol F are reacted with polysulfides in the presence of quaternary ammonium compounds as a catalyst at a temperature of from 20 to 150 °C. The exemplified reaction is a one pot and one step synthesis that does not require any organic solvent. Furthermore, the reaction is complete in approximately 4 hours.

However, the aromatic epoxy-terminated polysulfide polymers of WO 2004/099283 A1, while easier, less costly, more eco-friendly and quicker to produce, have been found to be less storage stable and less flexible than the aliphatic polymers of WO 03/099908 A1.

Accordingly, there is a need to provide improved epoxy-terminated polysulfide polymers that can be easily prepared, and which have good storage stability and good flexibility.

US 2005/131207 A1 discloses a method for producing polymeric polysulfides containing terminal epoxy groups. In the method, polysulfides containing terminal thiol groups are reacted with an excess of epichlorohydrin and alkaline lye, water is azeotropically distilled away with epichlorohydrin, the epichlorohydrin-containing epoxidized polysulfide solution is separated from the eliminated salt, the epichlorohydrin is distilled away, and the residue is optionally purified by means of thin film distillation.

EP 0 171 198 A1 discloses an addition reaction between epoxy-terminated polymers and mercaptan-terminated polymers to prepare stable liquid adduct compositions. One of the polymers is in stoichiometric excess so that the composition has free epoxy or mercaptan functional groups.

### Summary of the Disclosure

In a first aspect, the invention provides an aliphatic epoxy-terminated polysulfide polymer with the formula

R"-CHOH-CH₂-S-R-(S_{y}-R)ᵣS-CH₂-CHOH-R"

where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and where each R" is independently a radical having a formula selected from 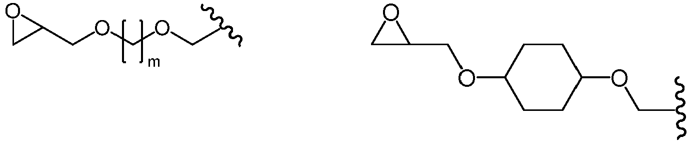 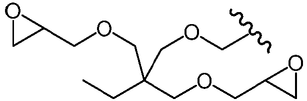 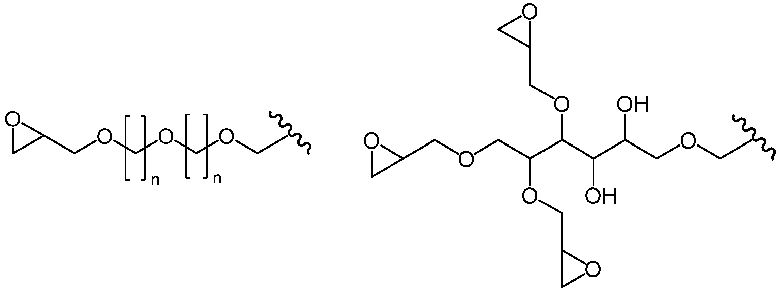 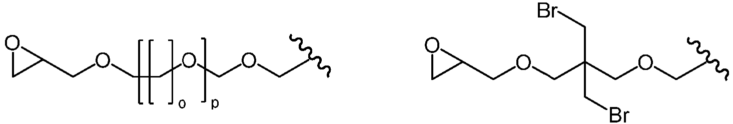 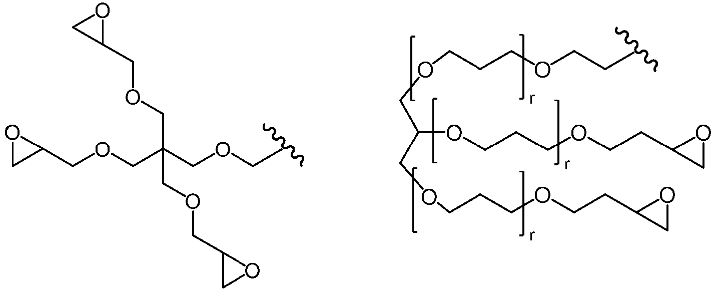 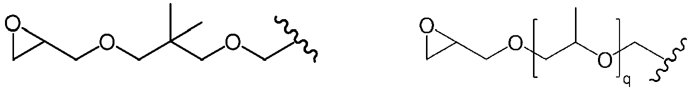
where, m, n, o, p, q and r independently have a value of from 1 to 10.

Advantageously, aliphatic epoxy-terminated polysulfide polymers in accordance with the first aspect of the invention can be produced in a simple one pot and one step synthesis. The reaction is complete in approximately 6 hours and does not require any organic solvent or any filtering or distillation steps. In addition, in contrast to WO 03/099908 A1, the reaction does not require any dangerous reactants to be handled.

Furthermore, aliphatic epoxy-terminated polysulfide polymers in accordance with the first aspect of the invention have been found to have improved properties over the aromatic epoxy-terminated polysulfide polymers of WO 2004/099283 A1, including improved storage stability, increased flexibility and lower viscosity.

In a second aspect, the invention provides a process for preparing an aliphatic epoxy-terminated polysulfide polymer comprising the step of reacting at least one polyepoxide with at least one polysulfide in the presence of an amine catalyst at a temperature of from 20 to 150 °C, wherein the at least one polysulfide is a compound of the formula

HS-R-(S_{y}-R)ₜ-SH (I)

where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and wherein the at least one polyepoxide is a compound having a formula selected from 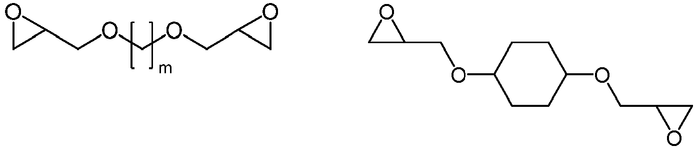 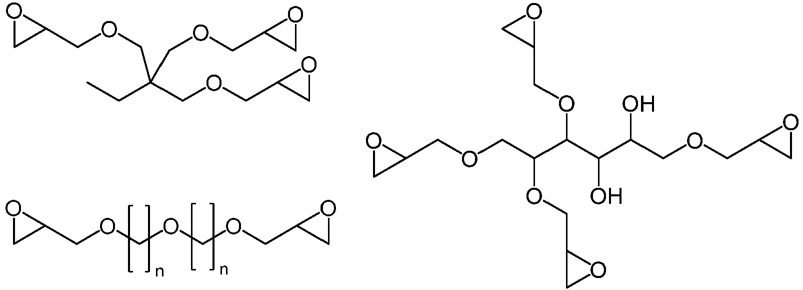 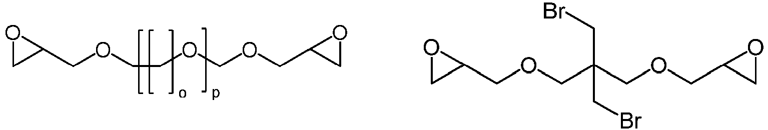 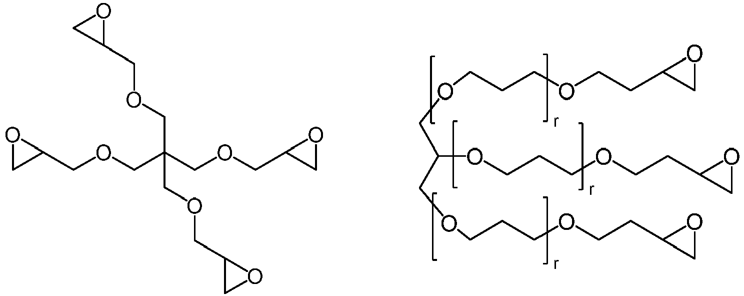 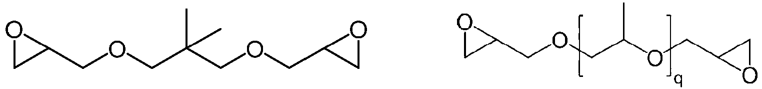
where, m, n, o, p, q and r independently have a value of from 1 to 10.

This solvent-free, amine-catalyzed addition reaction between the at least one SH-terminated polysulfide and the at least one polyepoxide provides a safer, quicker, easier, less costly and more environmentally friendly route to aliphatic epoxy-terminated polysulfide polymers than WO 03/099908 A1.

### Figures

Figure 1 shows the viscosity of the epoxy-terminated polysulfide polymer prepared in Example 1 upon storage from 0-300 days.
Figure 2 shows the viscosity of Thioplast EPS 25 upon storage from 0-12 months.
Figure 3 shows the viscosity of Thioplast EPS 70 upon storage from 0-12 months.
Figure 4 shows the results of the flexibility tests of Example 3 (Figure 4A using the polymer of Example 1, Figure 4B using Thioplast EPS 25 and Figure 4C using Thioplast EPS 70).

### Detailed description

As indicated above, the present disclosure is directed to an aliphatic epoxy-terminated polysulfide polymer with the formula

R"-CHOH-CH₂-S-R-(S_{y}-R)ₜ-S-CH₂-CHOH-R"

where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and where each R" is independently a radical having a formula selected from 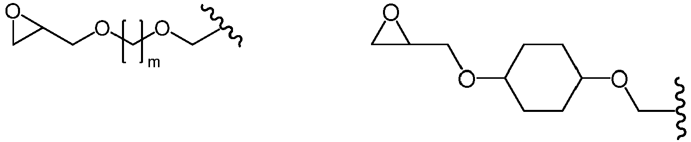 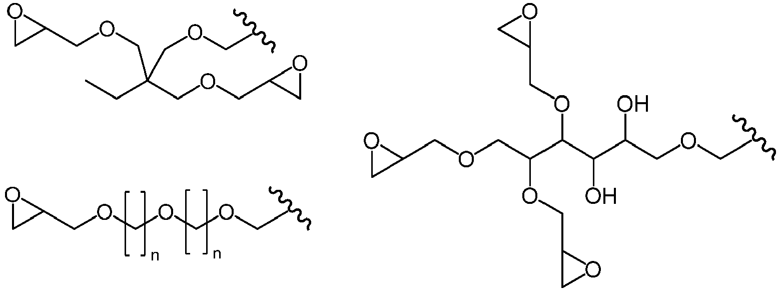 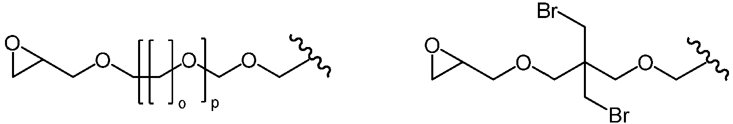 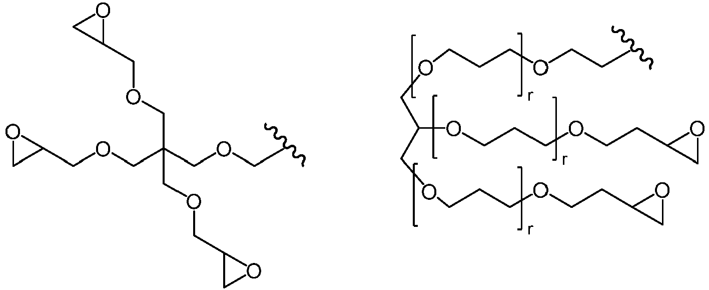 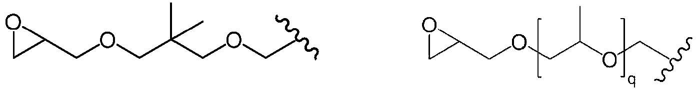
where, m, n, o, p, q and r independently have a value of from 1 to 10, preferably from 2 to 8, more preferably from 3 to 7, and most preferably from 2 to 6.

Preferably, t has a value of from 1 to 40, more preferably from 1 to 20, and most preferably from 5 to 10, while y is an average value of from 1.4 to 2.4, more preferably 1.8 to 2.2, and most preferably 2. With regard to the structure -(CH₂)ₐ-O-(CH₂)_{b}-O-(CH₂)_{c}-, b is preferably an integer value of from 1 to 4, most preferably 1 or 2, and a and c are preferably independently integers of from 1 to 6, most preferably 2. Preferably a and c are the same integer value.

As indicated above, each R" may be the same or different. Preferably, each R" is the same.

In a preferred embodiment, R" is independently a radical having a formula selected from 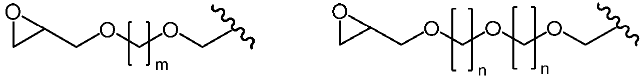 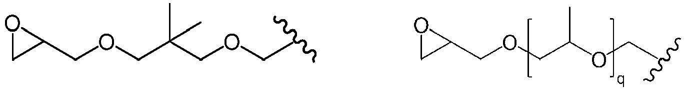 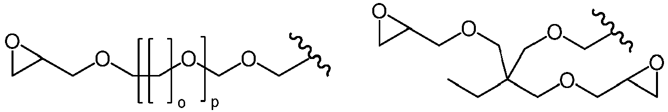 where m, n, o, p and q independently have a value of from 1 to 10, preferably from 2 to 8, more preferably from 3 to 7, and most preferably from 2 to 6.

Preferably, R" is independently a radical having a formula selected from 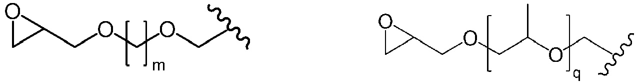 where m has a value of from 1 to 10, preferably from 2 to 8, more preferably from 3 to 7, and most preferably from 4 to 6, and q has a value of from 1 to 10, preferably from 1 to 5, and more preferably from 2 to 3.

Especially preferred is an aliphatic epoxy-terminated polysulfide polymer, as described above, where R" is a radical having the formula 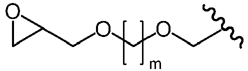 where m has a value of from 4 to 6, preferably 4 or 6, more preferably 4.

The aliphatic epoxy-terminated polysulfide polymer may have the structure R"-CHOH-CH₂-S-(CH₂)ₐ-O-(CH₂)_{b}-O-(CH₂)_{c}-[S_{y}-(CH₂)ₐ-O-(CH₂)_{b}-O-(CH₂)_{c}]ₜ-S-CH₂-CHOH-R", where R", a, b, c, y, and t have the same meaning as described above.

Advantageously, the aliphatic epoxy-terminated polysulfide polymers of the present invention are low viscosity liquids at room temperature. This makes them particularly suitable for use in sprayable formulations, even without solvent. In particular, the aliphatic epoxy-terminated polysulfide polymer may have a viscosity, at room temperature, of from 0.5 to 50.0 Pa*s, preferably from 1.0 to 20.0 Pa*s, more preferably from 2.0 to 10.0 Pa*s, and most preferably from 3.0 to 4.0 Pa*s, as measured with a cone/plate viscosimeter (described below).

The aliphatic epoxy-terminated polysulfide polymers may have an oxirane-oxygen content of from 0.1 to 20.0 %, preferably from 0.5 to 10 %, more preferably from 1.0 to 5.0 %, and most preferably from 2.0 to 3.0 %, as determined according to EN ISO 7142:2007.

The present invention is further directed to a process for the production of an aliphatic epoxy-terminated polysulfide polymer comprising the step of reacting at least one polyepoxide with at least one polysulfide in the presence of an amine catalyst at a temperature of from 20 to 150 °C, wherein the at least one polysulfide is a compound of the formula

HS-R-(S_{y}-R)ₜ-SH (I)

where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and wherein the at least one polyepoxide is a compound having a formula selected from 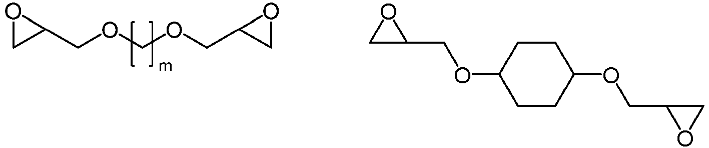 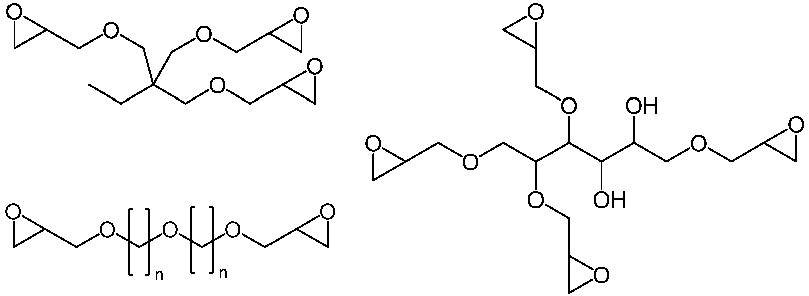 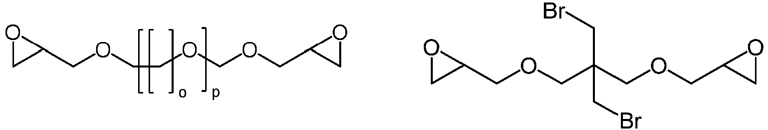 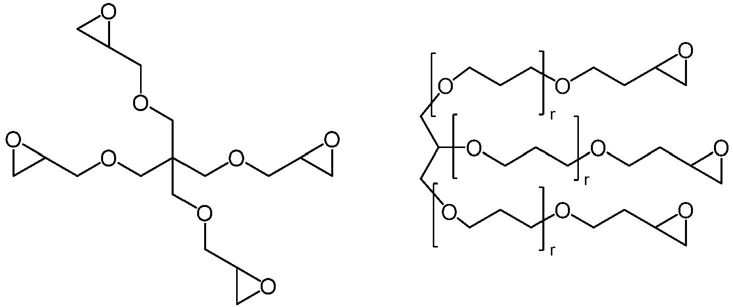 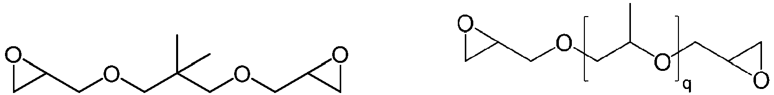
where, m, n, o, p, q and r independently have a value of from 1 to 10, preferably from 2 to 8, more preferably from 3 to 7, and most preferably from 2 to 6.

Preferably, t has a value of from 1 to 40, more preferably from 1 to 20, and most preferably from 5 to 10, while y is an average value of from 1.4 to 2.4, more preferably 1.8 to 2.2, and most preferably 2. With regard to the structure -(CH₂)ₐ-O-(CH₂)_{b}-O-(CH₂)_{c}-, b is preferably an integer value of from 1 to 4, most preferably 1 or 2, and a and c are preferably independently integers of from 1 to 6, most preferably 2. Preferably a and c are the same integer value.

As indicated above, the process comprises reacting at least one polyepoxide with at least one polysulfide. This includes reacting one or a mixture of two or more different polyepoxides with one or a mixture of two or more different polysulfides. Preferably, the process comprises reacting one polyepoxide with one polysulfide.

In a preferred embodiment, the at least one polyepoxide is selected from 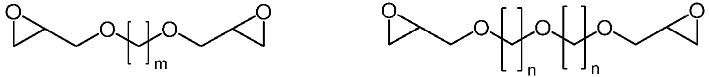 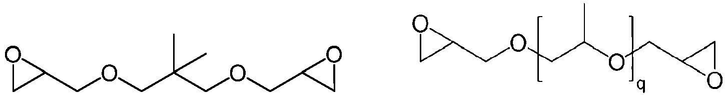 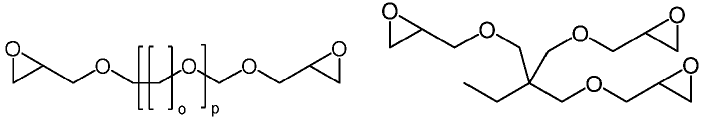 where m, n, o, p and q independently have a value of from 1 to 10, preferably from 2 to 8, more preferably from 3 to 7, and most preferably from 2 to 6.

Preferably, the at least one polyepoxide is selected from 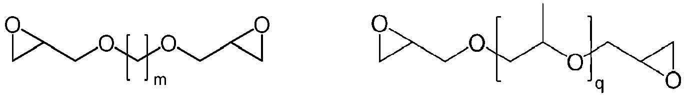 where m has a value of from 1 to 10, preferably from 2 to 8, more preferably from 3 to 7, and most preferably from 4 to 6, and q has a value of from 1 to 10, preferably from 1 to 5, and more preferably from 2 to 3. The at least one polyepoxide is preferably 1,4-butanediol diglycidyl ether.

The at least one polysulfide may have the structure HS-(CH₂)ₐ-O-(CH₂)_{b}-O-(CH₂)_{c}-[S_{y}-(CH₂)ₐ-O-(CH₂)_{b}-O-(CH₂)_{c}]ₜ-SH, where a, b, c, y, and t have the same meaning as described above.

Preferably, the reaction is carried out in a molar ratio of 2 mol of polysulfide to 4 mol of polyepoxide, preferably 1 mol of polysulfide to 2.5 mol of polyepoxide. Preferably, the polysulfide is initially introduced and the polyepoxide is metered in. It is advantageous to meter into a vessel in which the amine catalyst used is already present. However, it is also possible to meter the amine catalyst into the vessel while the polysulfide and/or the polyepoxide is being metered in.

The amine catalyst may be a tertiary or quaternary amine. In particular, the amine catalyst may be selected from methyl diethanolamine, triethylene diamine, methyldiethanol amine, bis(dimethylaminoethyl)ether, N,N-dimethylpiperidine, benzyldimethylamine, 2,4,6-tris(dimethylaminomethyl)phenol, dimethyldioctadecylammonium chloride, diethyl ester dimethyl ammonium chloride, benzyl triethyl ammonium chloride, methyl tricapryl ammonium chloride, methyl tributyl ammonium chloride, and methyl trioctyl ammonium chloride.

Preferably, the amine catalyst is a quaternary ammonium salt catalyst selected from dimethyl dioctadecyl ammonium chloride, diethyl ester dimethyl ammonium chloride, benzyl triethyl ammonium chloride, methyl tricapryl ammonium chloride, methyl tributyl ammonium chloride, and methyl trioctyl ammonium chloride, preferably, methyl trioctyl ammonium chloride.

The amine catalyst is used in catalytic amounts. The specific amount is dependent on the chosen reaction temperature and on the reactivity of the polyepoxides used and can be determined by an average person skilled in the art by simple preliminary experiments. In general, from 0.01 to 0.5 % by weight, based on the total weight of reactants, is sufficient.

The reaction of the at least one polyepoxide with the at least one polysulfide can be carried out at room temperature, but higher temperatures are preferably employed. A temperature range of from 20 to 150 °C is suitable. Preferably, a temperature of from 30 to 120 °C is used, more preferably from 40 to 100 °C, more preferably from 50 to 90 °C, and most preferably from 60 to 80 °C. The temperature of the exothermic addition reaction can be controlled by cooling the reactor. By using a coolable reactor, the temperature during the reaction can be exactly maintained, for example, between 50 and 80° C. The reaction is preferably carried out whilst stirring.

As indicated above, the reaction is carried out without the addition of a solvent, that is, the reaction is solvent free. This is advantageous in terms of the safety, ease, cost and environmental impact of the process.

The aliphatic epoxy-terminated polysulfide polymers of the present invention can be used as a binder for epoxy systems, including adhesives, coatings and sealants. Polyamines, polythiols or other customary compounds having at least two reactive hydrogen atoms can be used as curing agents.

The aliphatic epoxy-terminated polysulfide polymers of the present invention are especially useful for coatings and can be used in sprayable formulations without a solvent.

It is noted that various elements of the present invention, including but not limited to preferred ranges for the various parameters, can be combined unless they are mutually exclusive.

The invention will be elucidated by the following examples without being limited thereto or thereby.

### Examples

### Viscosity measurement

Viscosity is measured with a cone/plate viscosimeter (MCR 102, Anton Paar) with a temperature control unit keeping the sample at a constant temperature of 25 °C ± 0.1 K. The measurement is carried out at 6 different shear stresses / shear gradients (ascending). Depending on the measuring principle, the values for the shear stress τ or for the shear rate y are specified in the following ranges:
Shear stress range: 10⁰ < τ < 5 *10² Pa (τ₁ ... τₙ; n> 6)
Shear rate: 10⁻¹ < γ < 5 *10² s⁻¹ (γ₁ ... γₙ; n> 6)

### Sample storage

Samples were stored at a temperature of 23 °C ± 2K and a relative humidity of 50 ± 5%. The viscosity was measured at regular intervals using the method described above.

### Oxirane-oxygen content measurement

Oxirane-oxygen content was determined according to EN ISO 7142:2007 by addition of tetra ethylene ammonium bromide and subsequently titration with perchloric acid against crystal violet.

### Shore-hardness measurement

Shore-hardness measurement was carried out on a Bareiss Digitest measuring equipment in accordance with DIN ISO 7619-1. The Shore hardness is checked after a measuring time of 5 seconds and 3 minutes.

### Elongation at break and tensile strength measurement

To measure the elongation at break and the tensile strength, shoulder bars were punched out of the cured films in accordance with DIN 53504 S2 and inserted symmetrically into the TIRAtest 2410 tensile/elongation testing machine. The test specimens were stretched to break at a test speed of 100 mm/min and the physical parameters were calculated according to DIN 53504 S2.

### Example 1: Preparation of aliphatic epoxy-terminated polysulfide polymer

1263 g of polysulfide (Thioplast G4, Mw approx. 1100 g/mol, from Nouryon) is introduced into a 5-liter double-jacket reactor, equipped with an anchor agitator, bottom drain valve and metering device. The reactor is cooled with spring water and 1.5 g Aliquat 336 (methyl trioctyl ammonium chloride) is admixed whilst stirring. 800 g Epilox 13-21 (1,4-butanediol diglycidyl ether, from Leuna Harze) is then added to the reaction mixture in a continuously metered fashion by means of a reciprocating pump while vigorously stirring. The reactor is then heated to 60 °C, while carefully monitoring the reaction temperature. The reaction temperature increases beyond 60 °C due to the exothermal nature of the addition reaction. After reaching the peak temperature of 75 °C, the reaction mixture is stirred for another 2.5 hours. Afterwards, the reactor content is cooled to 20 °C, the stirring apparatus is switched off, and the product is pumped off from the reactor.

### Example 2: Storage stability tests

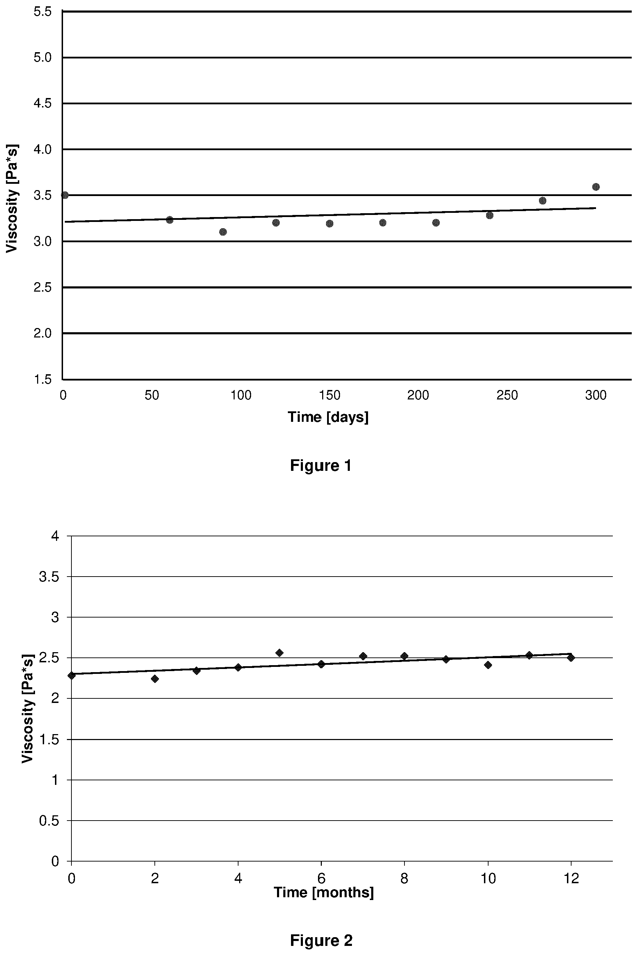

The aliphatic epoxy-terminated polysulfide polymer prepared in Example 1 was stored at a temperature of 23 °C ± 2K and a relative humidity of 50 ± 5% for 300 days and viscosity was measured at regular intervals using the above method. The results are shown in Figure 1.

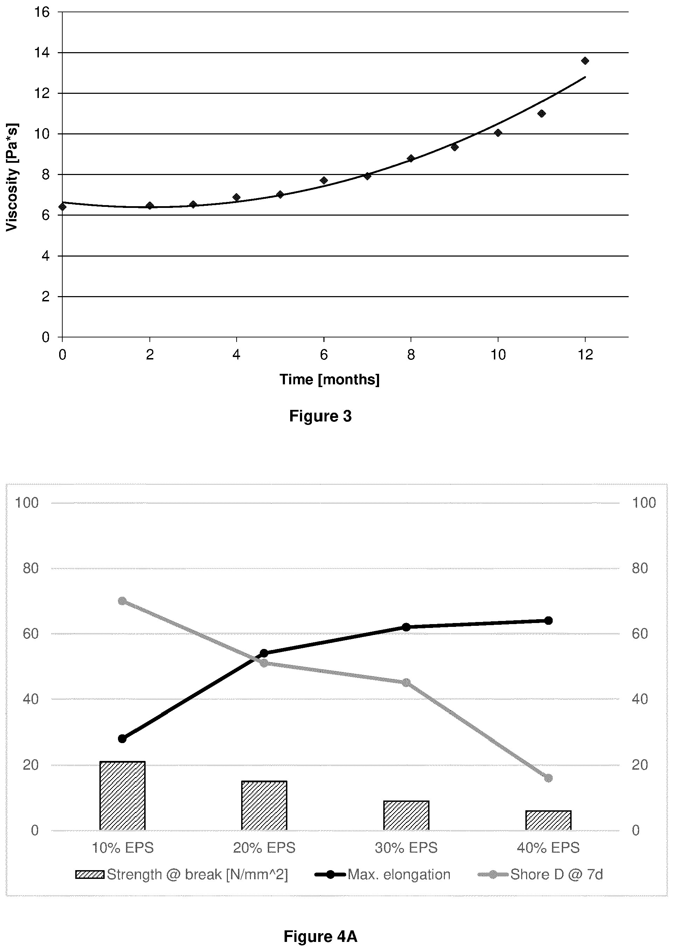

For comparison, commercially available epoxy-terminated polysulfide polymers Thioplast EPS 25 (end-capped by epichlorohydrin, from Nouryon) and Thioplast EPS 70 (end-capped by diglycidyl-ether of bisphenol A/F resin, from Nouryon) were stored at a temperature of 23 °C ± 2K and a relative humidity of 50 ± 5% for 12 months. The viscosities, measured at regular intervals using the method described above, are shown in Figures 2 and 3, respectively.

From Figures 1-3, the aliphatic epoxy-terminated polysulfide polymers of Example 1 and Thioplast EPS 25 can be seen to increase only slightly in viscosity upon storage for 300 days. In contrast, the viscosity of aromatic Thioplast EPS 70 more than doubles. The results are included in Table 1.

**Table 1: results of storage stability tests**

| Epoxy-terminated polysulfide polymers | Increase in viscosity after 300 days (%) |
|---|---|
| Example 1 | 7.01 |
| Thioplast EPS 25 | 8.77 |
| Thioplast EPS 70 | 57.03 |

### Example 3: Flexibility tests

The properties of the epoxy-terminated polysulfide polymers (termed "EPS") were tested at different concentrations. Tensile strength at break, elongation at break and Shore hardness are measured using the methods described above. The results are shown in Figures 4A-4C.

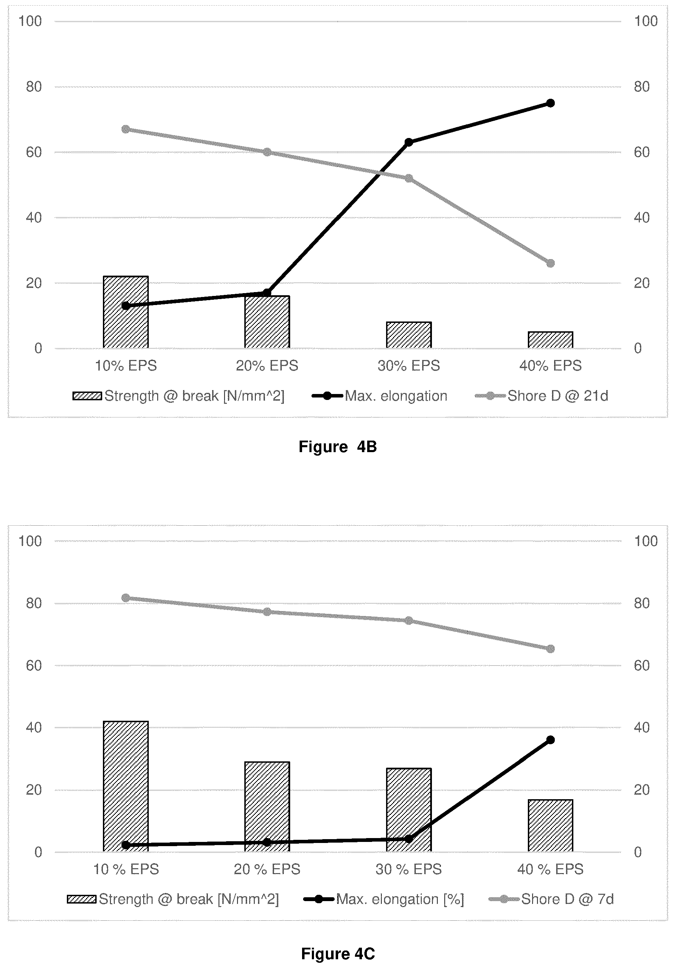

Upon comparing the results of the epoxy-terminated polysulfide polymer of Example 1 (shown in Figure 4A) with the results for Thioplast EPS 25 (shown in Figure 4B), the polymer of the present invention can be seen to have better flexibility in lower concentrations. This can be seen from the maximum elongation at break.

The flexibility of the epoxy-terminated polysulfide polymer of Example 1 is also significantly better than that of Thioplast EPS 70 (shown in Figure 4C) across all concentrations.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. No acknowledgement of any prior published document herein should be taken to be an admission or representation that the teaching thereof was common general knowledge in Europe or elsewhere at the date hereof.

## Claims

1. An aliphatic epoxy-terminated polysulfide polymer with the formula
R"-CHOH-CH₂-S-R-(S_{y}-R)ₜ-S-CH₂-CHOH-R"
where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and where each R" is independently a radical having a formula selected from 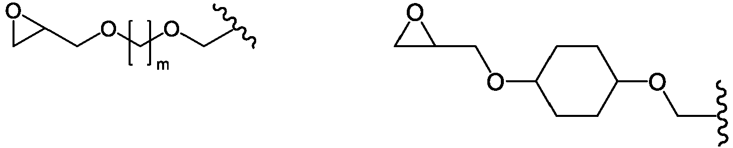 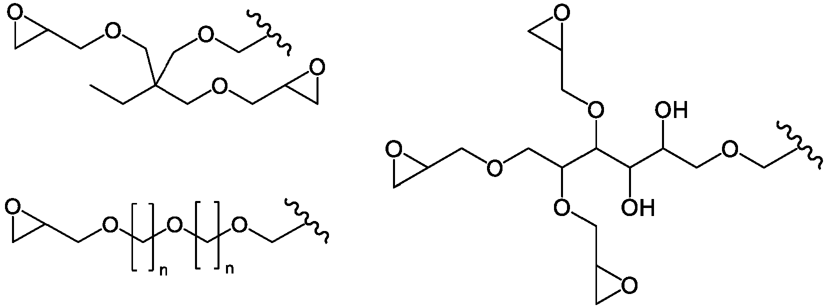 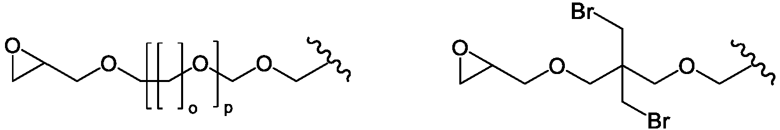 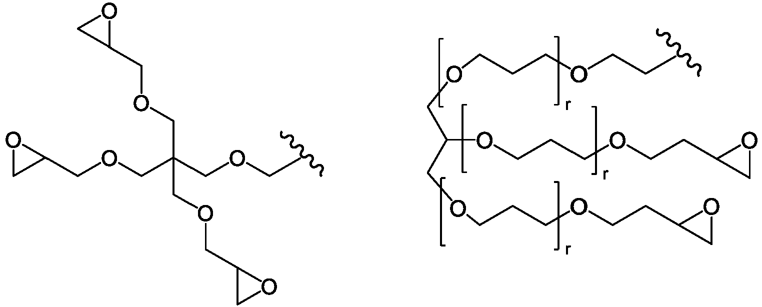 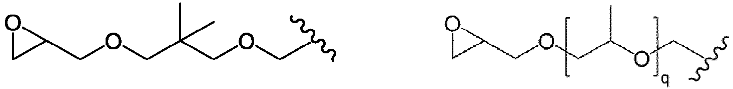
where, m, n, o, p, q and r independently have a value of from 1 to 10.

2. An aliphatic epoxy-terminated polysulfide polymer as claimed in claim 1, wherein R" is independently selected from 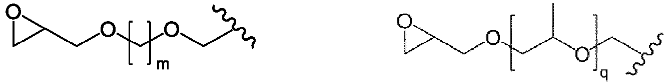 where m has a value of from 1 to 10, preferably from 2 to 8, more preferably from 3 to 7, and most preferably from 4 to 6, and q has a value of from 1 to 10, preferably from 1 to 5, and more preferably from 2 to 3.

3. An aliphatic epoxy-terminated polysulfide polymer as claimed in claim 1 or claim 2, wherein R" is 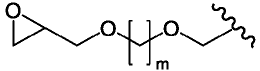 where m has a value of from 4 to 6, preferably 4.

4. An aliphatic epoxy-terminated polysulfide polymer as claimed in any preceding claim, having the structure
R"-CHOH-CH₂-S-(CH₂)ₐ-O-(CH₂)_{b}-O-(CH₂)_{c}-[S_{y}-(CH₂)ₐ-O-(CH₂)_{b}-O-(CH₂)_{c}]ₜ-S-CH₂ CHOH-R"
where R", a, b, c, y, and t have the same meaning as in claim 1.

5. An aliphatic epoxy-terminated polysulfide polymer as claimed in any preceding claim, wherein t has a value of from 1 to 40, preferably from 1 to 20, and more preferably from 5 to 10.

6. An aliphatic epoxy-terminated polysulfide polymer as claimed in any preceding claim, having a viscosity at room temperature of from 0.5 to 50.0 Pa*s, preferably from 1.0 to 20.0 Pa*s, more preferably from 2.0 to 10.0 Pa*s, and most preferably from 3.0 to 4.0 Pa*s, as measured with a cone/plate viscosimeter.

7. An aliphatic epoxy-terminated polysulfide polymer as claimed in any preceding claim, having an oxirane-oxygen content of from 0.1 to 20.0 %, preferably from 0.5 to 10 %, more preferably from 1.0 to 5.0 %, and most preferably from 2.0 to 3.0 %, as determined according to EN ISO 7142:2007.

8. A process for the production of an aliphatic epoxy-terminated polysulfide polymer comprising the step of reacting at least one polyepoxide with at least one polysulfide in the presence of an amine catalyst at a temperature of from 20 to 150 °C, wherein the at least one polysulfide is a compound of the formula
HS-R-(S_{y}-R)ₜSH (I)
where each R is independently selected from branched alkanediyl or branched arenediyl groups and groups with the structure -(CH₂)ₐ-O-(CH₂)_{b}-O-(CH₂)_{c}- and 0-20% of the number of R-groups in the polymer are branched alkanediyl or branched arenediyl groups and 80-100% of the number of R-groups in the polymer have the structure -(CH₂)ₐ-O-(CH₂)_{b}-O-(CH₂)_{c}-, where t has a value of from 1 to 60, y is an average value of from 1.0 to 2.5, b is an integer value of from 1 to 8, and a and c are independently integers of from 1 to 10, and wherein the at least one polyepoxide is a compound having a formula selected from 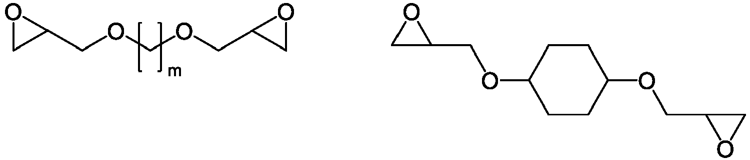 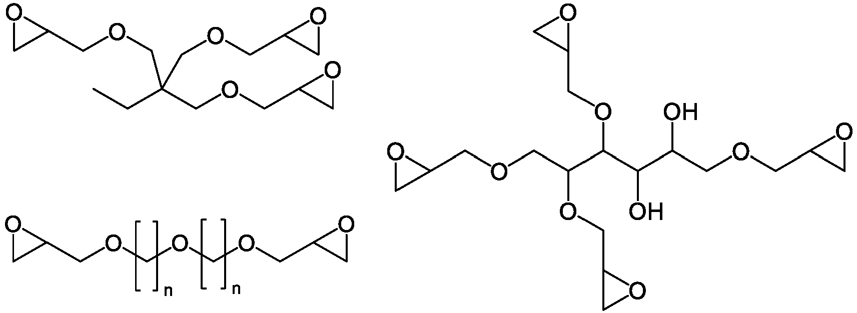 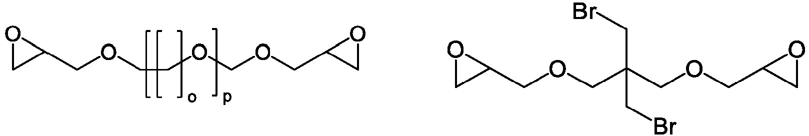 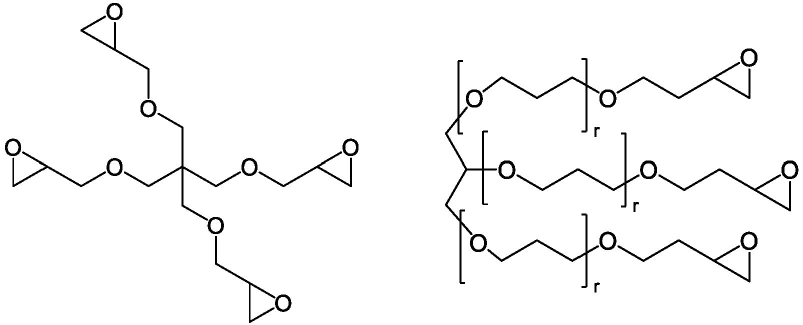 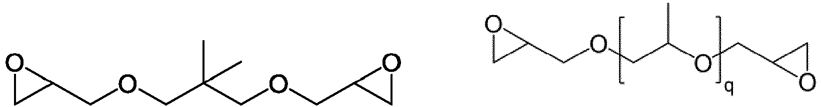
where, m, n, o, p, q and r independently have a value of from 1 to 10.

9. A process as claimed in claim 8, wherein the at least one polyepoxide is selected from 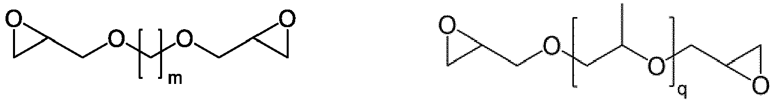 where m has a value of from 1 to 10, preferably from 2 to 8, and more preferably from 4 to 6, and q has a value of from 1 to 10, preferably from 1 to 5, and more preferably from 2 to 3.

10. A process as claimed in claim 8 or claim 9, wherein the at least one polyepoxide is 1,4-Butanediol diglycidyl ether or 1,6-Hexanediol diglycidylether.

11. A process as claimed in any of claims 8 to 10, wherein the at least one polysulfide has the structure
HS-(CH₂)ₐ-O-(CH₂)_{b}-O-(CH₂)_{c}-[S_{y}-(CH₂)ₐ-O-(CH₂)_{b}-O-(CH₂)_{c}]ₜSH
where a, b, c, y, and t have the same meaning as in claim 8.

12. A process as claimed in any of claims 8 to 11, wherein t has a value of from 1 to 40, preferably from 1 to 20, and more preferably from 5 to 10.

13. A process as claimed in any of claims 8 to 12, wherein the reaction is carried out in a molar ratio of 2 mol of polysulfide to 4 mol of polyepoxide, preferably 1 mol of polysulfide to 2.5 mol of polyepoxide.

14. A process as claimed in any of claims 8 to 13, wherein the amine catalyst is a tertiary or quaternary amine, preferably selected from methyl diethanolamine, triethylene diamine, methyldiethanol amine, bis(dimethylaminoethyl)ether, N,N-dimethylpiperidine, benzyldimethylamine, 2,4,6-tris(dimethylaminomethyl)phenol, dimethyldioctadecylammonium chloride, diethyl ester dimethyl ammonium chloride, benzyltriethylammonium chloride, methyltricaprylammonium chloride, methyltributylammonium chloride, and methyltrioctylammonium chloride.

## Patentansprüche

1. Aliphatisches epoxyterminiertes Polysulfidpolymer mit der Formel
R"-CHOH-CH₂-S-R-(S_{y}-R)ₜ-S-CH₂-CHOH-R"
wobei jedes R unabhängig unter verzweigten Alkandiyl- oder verzweigten Arendiylgruppen und Gruppen mit der Struktur - (CH₂)ₐ-O-(CH₂)_{b}-O-(CH₂)_{c}- ausgewählt ist und 0-20 % der Anzahl von R-Gruppen in dem Polymer verzweigte Alkandiyl- oder verzweigte Arendiylgruppen sind und 80-100 % der Anzahl von R-Gruppen in dem Polymer die Struktur -(CH₂)ₐ-O-(CH₂)_{b}-O-(CH₂)_{c}-aufweisen, wobei t einen Wert von 1 bis 60 aufweist, y ein Durchschnittswert von 1,0 bis 2,5 ist, b ein Ganzzahlwert von 1 bis 8 ist und a und c unabhängig ganze Zahlen von 1 bis 10 sind und wobei jedes R" unabhängig ein Radikal ist, das eine Formel aufweist ausgewählt unter 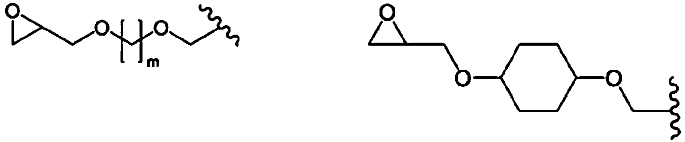 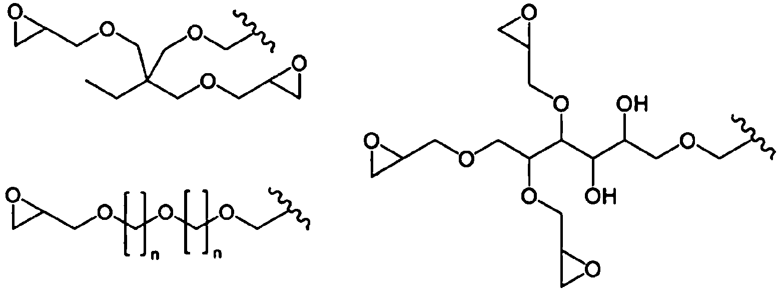 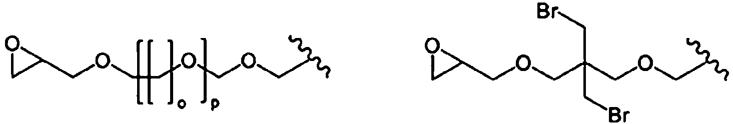 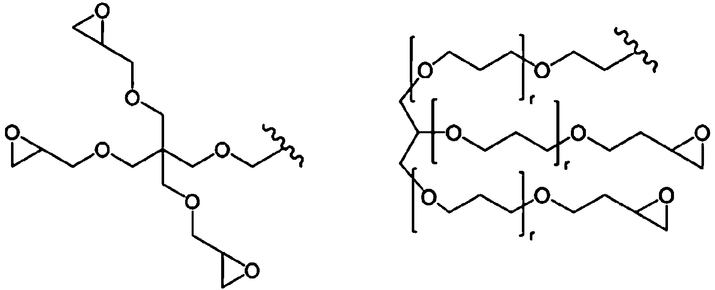 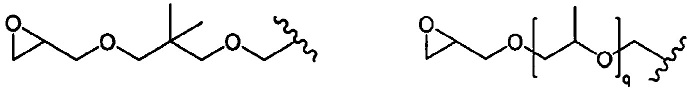
wobei m, n, o, p, q und r unabhängig einen Wert von 1 bis 10 aufweisen.

2. Aliphatisches epoxyterminiertes Polysulfidpolymer nach Anspruch 1, wobei R" unabhängig ausgewählt ist unter 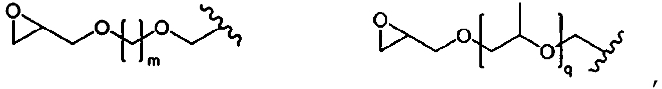 wobei m einen Wert von 1 bis 10, bevorzugt von 2 bis 8, noch bevorzugter von 3 bis 7 und am bevorzugtesten von 4 bis 6 aufweist und q einen Wert von 1 bis 10, bevorzugt von 1 bis 5 und noch bevorzugter von 2 bis 3 aufweist.

3. Aliphatisches epoxyterminiertes Polysulfidpolymer nach Anspruch 1 oder Anspruch 2, wobei R" 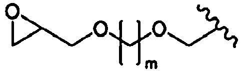 ist, wobei m einen Wert von 4 bis 6, bevorzugt 4, aufweist.

4. Aliphatisches epoxyterminiertes Polysulfidpolymer nach einem vorhergehenden Anspruch, das die Struktur
R"-CHOH-CH₂-S-(CH₂)ₐ-O-(CH₂)_{b}-O-(CH₂)_{c}-[S_{y}-(CH₂)ₐ-O- (CH₂)_{b}-O-(CH₂)_{c}-]ₜ-S-CH₂-CHOH-R"
aufweist, wobei R", a, b, c, y und t dieselbe Bedeutung wie in Anspruch 1 aufweisen.

5. Aliphatisches epoxyterminiertes Polysulfidpolymer nach einem vorhergehenden Anspruch, wobei t einen Wert von 1 bis 40, bevorzugt von 1 bis 20 und noch bevorzugter von 5 bis 10 aufweist.

6. Aliphatisches epoxyterminiertes Polysulfidpolymer nach einem vorhergehenden Anspruch, das eine Viskosität bei Raumtemperatur von 0,5 bis 50,0 Pa*s, bevorzugt von 1,0 bis 20,0 Pa*s, noch bevorzugter von 2,0 bis 10,0 Pa*s und am bevorzugtesten von 3,0 bis 4,0 Pa*s, wie mit einem Konus-/Plattenviskosimeter gemessen, aufweist.

7. Aliphatisches epoxyterminiertes Polysulfidpolymer nach einem vorhergehenden Anspruch, das einen Oxiran-Sauerstoffgehalt von 0,1 bis 20,0 %, bevorzugt von 0,5 bis 10 %, noch bevorzugter von 1,0 bis 5,0 % und am bevorzugtesten von 2,0 bis 3,0 %, wie EN ISO 7152:2007 entsprechend bestimmt, aufweist.

8. Verfahren für die Herstellung eines aliphatischen epoxyterminierten Polysulfidpolymers , umfassend den Schritt des Reagierens mindestens eines Polyepoxids mit mindestens einem Polysulfid in Gegenwart eines Aminkatalysators bei einer Temperatur von 20 bis 150 °C, wobei das mindestens eine Polysulfid eine Verbindung der Formel
HS-R--(S_{y}--R)ₜ-SH (I)
ist, wobei jedes R unabhängig unter verzweigten Alkandiyl- oder verzweigten Arendiylgruppen und Gruppen mit der Struktur -(CH₂)ₐ-O-(CH₂)_{b}-O-(CH₂)_{c}- ausgewählt ist und 0-20 % der Anzahl von R-Gruppen in dem Polymer verzweigte Alkandiyl- oder verzweigte Arendiylgruppen sind und 80-100 % der Anzahl von R-Gruppen in dem Polymer die Struktur - (CH₂)ₐ-O-(CH₂)_{b}-O-(CH₂)_{c}- aufweisen, wobei t einen Wert von 1 bis 60 aufweist, y ein Durchschnittswert von 1,0 bis 2,5 ist, b ein Ganzzahlwert von 1 bis 8 ist und a und c unabhängige ganze Zahlen von 1 bis 10 sind und wobei das mindestens eine Polyepoxid eine Verbindung ist, die eine Formel aufweist ausgewählt unter 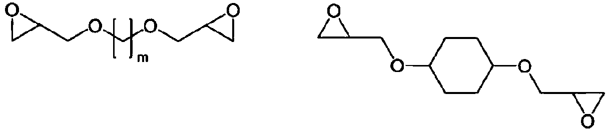 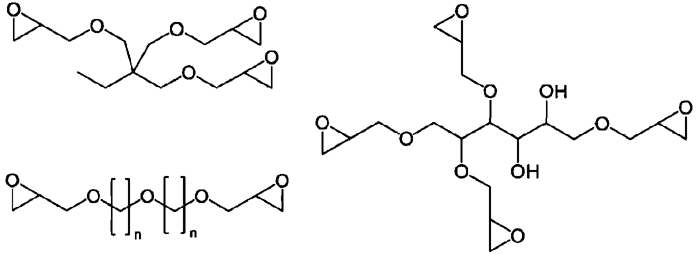 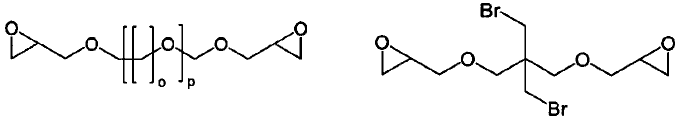 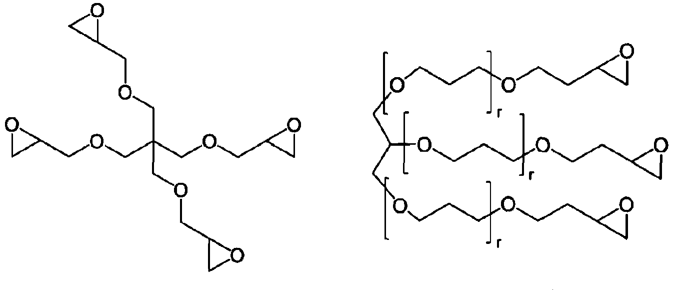 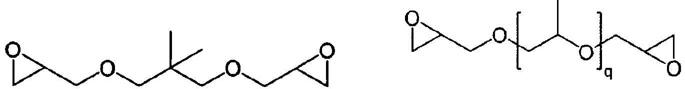
wobei m, n, o, p, q und r unabhängig einen Wert von 1 bis 10 aufweisen.

9. Verfahren nach Anspruch 8, wobei das mindestens eine Polyepoxid ausgewählt ist unter 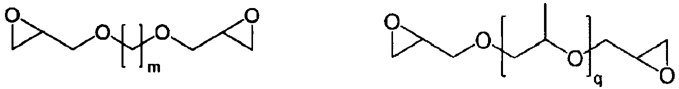 wobei m einen Wert von 1 bis 10, bevorzugt von 2 bis 8 und noch bevorzugter von 4 bis 6 aufweist und q einen Wert von 1 bis 10, bevorzugt von 1 bis 5 und noch bevorzugter 2 bis 3 aufweist.

10. Verfahren nach Anspruch 8 oder Anspruch 9, wobei das mindestens eine Polyepoxid 1,4-Butandioldiclycidyletheer oder 1,6-Hexandiolydiclycidylether ist.

11. Verfahren nach einem der Ansprüche 8 bis 10, wobei das mindestens eine Polysulfid die Struktur
HS-(CH₂)ₐ-O-(CH₂)_{b}-O-(CH₂)_{c}-[Sy-(CH₂)ₐ-O-(CH₂)_{b}-O- (CH₂)_{c}]t-SH
aufweist, wobei a, b, c, y und t dieselbe Bedeutung wie in Anspruch 8 aufweisen.

12. Verfahren nach einem der Ansprüche 8 bis 11, wobei t einen Wert von 1 bis 40, bevorzugt von 1 bis 20 und noch bevorzugter von 5 bis 10 aufweist.

13. Verfahren nach einem der Ansprüche 8 bis 12, wobei die Reaktion in einem Molverhältnis von 2 Mol Polysulfid zu 4 Mol Polyepoxid, bevorzugt 1 Mol Polysulfid zu 2,5 Mol Polyepoxid ausgeführt wird.

14. Verfahren nach einem der Ansprüche 8 bis 13, wobei der Aminkatalysator ein tertiäres oder quartäres Amin, bevorzugt ausgewählt unter Methyldietholamin, Triethylendiamin, Methyldiethanolamin, Bis(dimethylaminoethyl)ether, N,N-Dimethylpiperidin, Benzyldimethylamin, 2,4,6-Tris(dimethylaminomethyl)phenol, Dimethyldioctadecylammoniumchlorid, Diethylesterdimethylammoniumchlorid, Benzyltriethylammoniumchlorid, Methyltricaprylammoniumchlorid, Methyltributylammoniumchlorid und Methyltrioctylammoniumchlorid ist.

## Revendications

1. Polymère polysulfure aliphatique à terminaison époxy ayant la formule :
R"-CHOH-CH₂-S-R-(S_{y}-R)ₜ-S-CH₂-CHOH-R"
où chaque R est indépendamment choisi parmi les groupes alcanediyle ramifiés ou arènediyle ramifiés et les groupes ayant la structure - (CH₂)ₐ-O-(CH₂)_{b}-O-(CH₂)_{c}- et 0 à 20 % du nombre de groupes R dans le polymère sont des groupes alcanediyle ramifiés ou arènediyle ramifiés et 80 à 100 % du nombre de groupes R dans le polymère ont la structure -(CH₂)ₐ-O-(CH₂)_{b}-O-(CH₂)_{c}-, où t a une valeur comprise entre 1 et 60, y est une valeur moyenne comprise entre 1,0 et 2,5, b est un entier compris entre 1 et 8, et a et c sont indépendamment des entiers compris entre 1 et 10, et où R" est indépendamment un radical ayant une formule choisie parmi 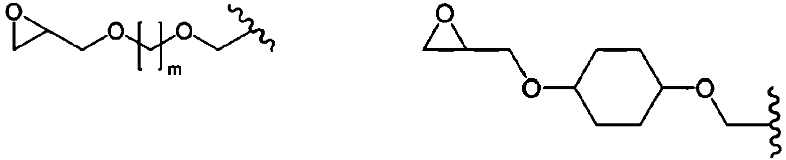 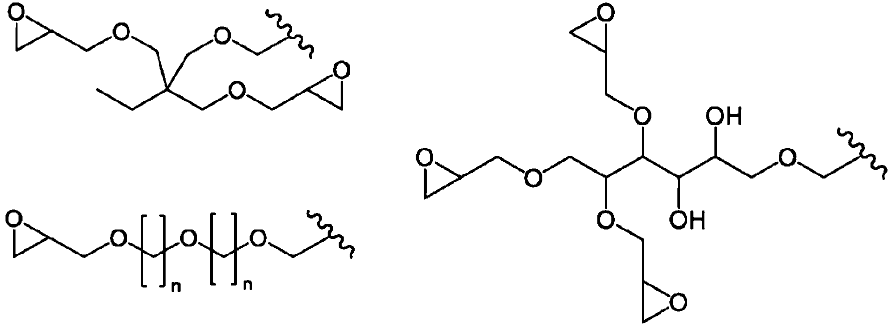 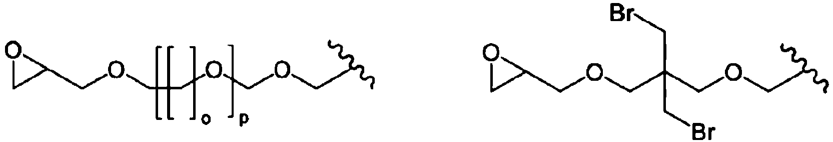 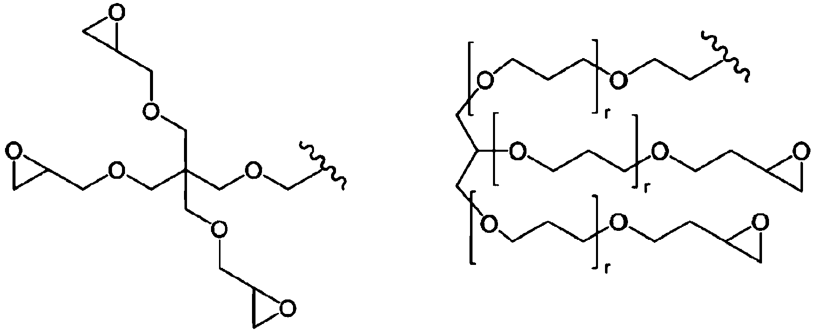 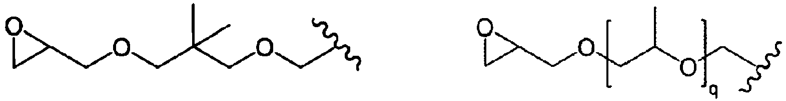
où m, n, o, p, q et r ont indépendamment une valeur comprise entre 1 et 10.

2. Polymère polysulfure aliphatique à terminaison époxy selon la revendication 1, dans lequel R" est indépendamment choisi parmi 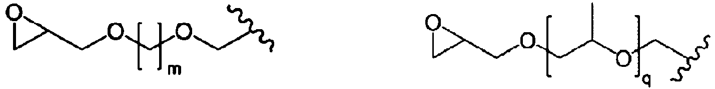 où m a une valeur comprise entre 1 et 10, de préférence entre 2 et 8, plus préférablement entre 3 et 7, et de manière préférée entre toutes entre 4 et 6, et q a une valeur comprise entre 1 et 10, de préférence entre 1 et 5, et plus préférablement entre 2 et 3.

3. Polymère polysulfure aliphatique à terminaison époxy selon la revendication 1 ou la revendication 2, dans lequel R" est 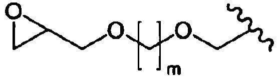 où m a une valeur comprise entre 4 et 6, de préférence égale à 4.

4. Polymère polysulfure aliphatique à terminaison époxy selon une quelconque revendication précédente, ayant la structure suivante :
R"-CHOH-CH₂-S-(CH₂)ₐ-O-(CH₂)_{b}-O-(CH₂)_{c}-[S_{y}-(CH₂)ₐ-O- (CH₂)b-O-(CH₂)_{c}]ₜ-S-CH₂-CHOH-R"
où R", a, b, c, y et t ont la même signification que dans la revendication 1.

5. Polymère polysulfure aliphatique à terminaison époxy selon une quelconque revendication précédente, dans lequel t a une valeur comprise entre 1 et 40, de préférence entre 1 et 20, et plus préférablement entre 5 et 10.

6. Polymère polysulfure aliphatique à terminaison époxy selon une quelconque revendication précédente, ayant une viscosité à température ambiante comprise entre 0,5 et 50,0 Pa*s, de préférence entre 1,0 et 20,0 Pa*s, plus préférablement entre 2,0 et 10,0 Pa*s, et de manière préférée entre toutes entre 3,0 et 4,0 Pa*s, comme mesurée à l'aide d'un viscosimètre à cône/plan.

7. Polymère polysulfure aliphatique à terminaison époxy selon une quelconque revendication précédente, ayant une teneur en oxygène oxiranique comprise entre 0,1 et 20,0 %, de préférence entre 0,5 et 10 %, plus préférablement entre 1,0 et 5,0 %, et de manière préférée entre toutes entre 2,0 et 3,0 %, comme déterminée selon la norme EN ISO 7142:2007.

8. Procédé de production d'un polymère polysulfure aliphatique à terminaison époxy comprenant l'étape consistant à faire réagir au moins un polyépoxyde avec au moins un polysulfure en présence d'un catalyseur aminé à une température comprise entre 20 et 150 °C, dans lequel l'au moins un polysulfure est un composé de formule :
HS-R-(S_{y}-R)ₜ-SH (I)
où chaque R est indépendamment choisi parmi les groupes alcanediyle ramifiés ou arènediyle ramifiés et les groupes ayant la structure -(CH₂)ₐ-O-(CH₂)_{b}-O-(CH₂)_{c}- et 0 à 20 % du nombre de groupes R dans le polymère sont des groupes alcanediyle ramifiés ou arènediyle ramifiés et 80 à 100 % du nombre de groupes R dans le polymère ont la structure -(CH₂)ₐ-O-(CH₂)_{b}-O-(CH₂)_{c}-, où t a une valeur comprise entre 1 et 60, y est une valeur moyenne comprise entre 1,0 et 2,5, b est un entier compris entre 1 et 8, et a et c sont indépendamment des entiers compris entre 1 et 10, et dans lequel l'au moins un polyépoxyde est un composé ayant une formule choisie parmi 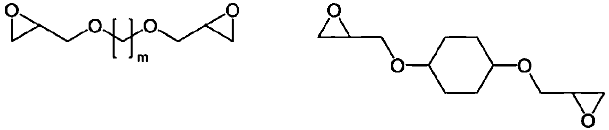 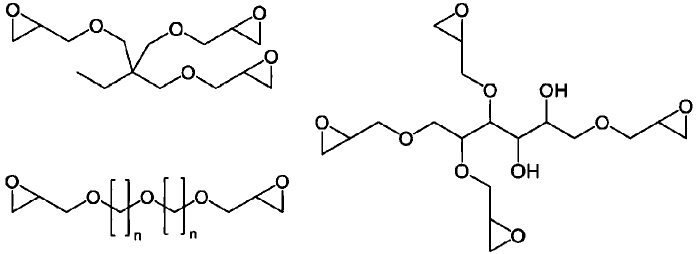 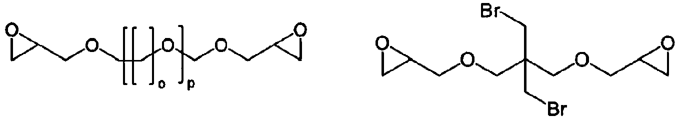 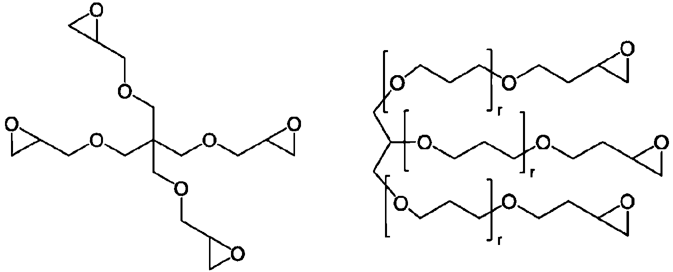 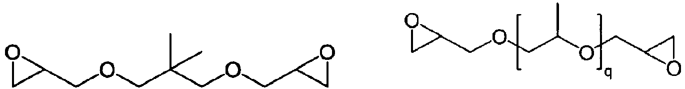
où m, n, o, p, q et r ont indépendamment une valeur comprise entre 1 et 10.

9. Procédé selon la revendication 8, dans lequel l'au moins un polyépoxyde est choisi parmi 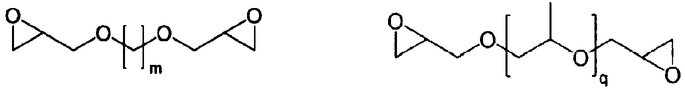 où m a une valeur comprise entre 1 et 10, de préférence entre 2 et 8, et plus préférablement entre 4 et 6, et q a une valeur comprise entre 1 et 10, de préférence entre 1 et 5, et plus préférablement entre 2 et 3.

10. Procédé selon la revendication 8 ou la revendication 9, dans lequel l'au moins un polyépoxyde est l'éther diglycidylique de 1,4-butanediol ou l'éther diglycidylique de 1,6-hexanediol.

11. Procédé selon l'une quelconque des revendications 8 à 10, dans lequel l'au moins un polysulfure a la structure
HS-(CH₂)ₐ-O-(CH₂)b-O-(CH₂)_{c}-[Sy-(CH₂)ₐ-O-(CH₂)b-O- (CH₂)_{c}]ₜ-SH
où a, b, c, y et t ont la même signification que dans la revendication 8.

12. Procédé selon l'une quelconque des revendications 8 à 11, dans lequel t a une valeur comprise entre 1 et 40, de préférence entre 1 et 20, et plus préférablement entre 5 et 10.

13. Procédé selon l'une quelconque des revendications 8 à 12, dans lequel la réaction est réalisée selon un rapport molaire de 2 moles de polysulfure pour 4 moles de polyépoxyde, de préférence 1 mole de polysulfure pour 2,5 moles de polyépoxyde.

14. Procédé selon l'une quelconque des revendications 8 à 13, dans lequel le catalyseur aminé est une amine tertiaire ou quaternaire, de préférence choisie parmi la méthyldiéthanolamine, la triéthylènediamine, la méthyldiéthanolamine, l'éther bis(diméthylaminoéthylique), la N,N-diméthylpipéridine, la benzyldiméthylamine, le 2,4,6-tris(diméthylaminométhyl)phénol, le chlorure de diméthyldioctadécylammonium, le chlorure de diméthylammonium de diester éthylique, le chlorure de benzyltriéthylammonium, le chlorure de méthyltricaprylammonium, le chlorure de méthyltributylammonium et le chlorure de méthyltrioctylammonium.
